(19) **Europäisches Patentamt**
**European Patent Office**
**Office européen des brevets**

(11) **EP 3 185 467 A1**

(12) **EUROPEAN PATENT APPLICATION**

(43) Date of publication:
**28.06.2017 Bulletin 2017/26**

(51) Int Cl.:
***H04L 9/32*** (2006.01)

(21) Application number: **15307071.9**

(22) Date of filing: **21.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
- **STOCKER, Klaus**
  **70435 Stuttgart (DE)**
- **TEMPL, Wolfgang**
  **70435 Stuttgart (DE)**
- **KOPP, Dieter**
  **70435 Stuttgart (DE)**

(74) Representative: **Mouney, Jérôme**
**Alcatel-Lucent International**
**148/152 route de la Reine**
**92100 Boulogne-Billancourt (FR)**

(54) **CERTIFICATION OF LOCATION OF A COMMUNICATION DEVICE**

(57)     To certify location of a first communication device being located in the vicinity of a second communication device, this latter :

creates a random sequence (RS) of bits and encrypts it with a symmetrical key (KS) received from the first communication device, yielding an encrypted sequence (RSKS),

sends a first message (Mes1) to the first communication device, the message containing the encrypted sequence (RSKS),

receives a second message (Mes2) from the first communication device, the second message containing a decrypted random sequence (RS'), the decrypted random sequence (RS') being the result of a bitwise feeding of the encrypted sequence (RSKS) and the symmetrical key (KS) to a signals combiner for decryption,

stores the decrypted random sequence (RS') in a shift register,

compares the received decrypted random sequence (RS') with the created random sequence after a time interval comprising travel times (Td) related to the transmission of the first and second messages and processing times (Tp) for decryption, storage and comparison of the random sequence,

if the result of the comparison is valid, generates a certificate containing at least the signal travelling time and a timestamp, the signal travelling time being deducted from said time interval.

FIG. 2

S1 — Mobile device → [request(K)] → Base station

S2 — Base station→ [KS] → Mobile device

S3 — Base station : RS → KS : RSKS

S4 — Base station → [Mes1(RSKS)] → Mobile device at time T0

S5 — Mobile device : starting counter at time T0 + Td

S6 — Mobile device : (RSKS, KS) → XOR : RS' at time T0 + Td + Tp

S7 — Mobile device → [Mes2(RS')] → Base station at time T0 + 2Td + Tp

S8 — Base station : storing RS' at time T0 + 2Td + 2Tp

S9 — Base station : comparing RS and RS' at time T0 + 2Td + 3Tp

S10 — Base station → [certificate] → Mobile device

## Description

FIELD OF INVENTION

The present subject matter relates to the determination of the location of a device with respect to another device.

BACKGROUND

Localization and/or navigation systems have gained interest in recent years due to the explosion in the number of networked smart devices and technologies. For example, a localization system can provide important information to a first responder regarding the location of a user in a shopping mall, museum, or a stadium. Location information can also help service providers in identifying coverage holes and traffic hotspots when deploying networks such as 4G Long Term Evolution ("LTE") small cell networks.

Today there are already hundreds of use cases for authentication for door access, vehicles, machines, applications and transactions. Some of them already use the geo-location or close proximity as a component of the authentication, however there is no proof that close proximity or the geo-location of a device is really true.

A number of methods are known to derive the geo-location (Global Positioning System GPS, Triangulation) or to prove close proximity (Radio-Frequency IDentification RFID) to an access point.

According to GPS or triangulation methods, signals from GPS system or Mobile Radio system can be delayed by relay stations or completely irritated by fake networks or fake transmitters. The resolution can be within meters in best case. With differential GPS, a resolution of centimeter can be achieved, however with high effort in additional referential receivers.

According to RFID methods, close proximity is needed for physical reasons to make the system work. However, a well-known security problem is appearing - the so-called relay station attack. In this case the close proximity of the authorized user is faked by a relay system that transports the signals needed for the authorization of an access control system from the authorized user.

Finally, none of the known methods is reaching such a security level so that the geo-location cannot be faked.

SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a method to certify location of a communication device is described. A method to certify location of a first communication device being located in the vicinity of a second communication device, comprises the following steps in the second communication device:

creating a random sequence of bits and encrypting it with a symmetrical key received from the first communication device, yielding an encrypted sequence,
sending a first message to the first communication device, the message containing the encrypted sequence,
receiving a second message from the first communication device, the second message containing a decrypted random sequence, the decrypted random sequence being the result of a bitwise feeding of the encrypted sequence and the symmetrical key to a signals combiner for decryption,
storing the decrypted random sequence in a shift register,
comparing the received decrypted random sequence with the created random sequence after a time interval comprising travel times related to the transmission of the first and second messages and processing times for decryption, storage and comparison of the random sequence,
if the result of the comparison is valid, generating a certificate containing at least the signal travelling time and a timestamp, the signal travelling time being deducted from said time interval.

Advantageously, the method provides a unique approach to certify the true geo-location of a communication device that cannot be faked. The method cannot be faked by man-in-the-middle or relay-station-attacks, because the method makes use of a very fast principle and the fact that the round trip time of the bit sequence is very fast. This does not allow any delay caused by a relay station without being discovered.

In an embodiment, the certificate further contains a trusted geo-location that is derived from the signal traveling time and the known location of the second communication device.

In an embodiment, the second communication device sends the generated certificate to the first communication device.

In an embodiment, during comparison, the decrypted random sequence and the created random sequence are subsequently shifted by one clock cycle one after the other in a shift register.

In an embodiment, the travel time is deducted from the half of the subtraction of three processing times from the time interval.

In an embodiment, said time interval covers the time between the beginning of the sending of the first message and the end of the comparison of the received decrypted random sequence with the created random sequence.

In an embodiment, at the beginning of the sending of the first message, a counter in the second communication device starts counting up the addresses of cells of the shift register.

In an embodiment, the first message comprises a frame synchronization pulse that is followed by the encrypted sequence.

In an embodiment, the signals combiner is adapted to perform a "XOR" logical operation for combining the encrypted sequence and the symmetrical key for yielding to the decrypted.

In an embodiment, the first message is sent over a frequency, and a resolution of distance is deducted from the division of the light speed by said frequency.

In an embodiment, the first and second communication devices are fixed or mobile communication devices.

In another implementation a communication device is described. A communication device to certify location of another communication device being located in the vicinity of said communication device, comprises:

means for creating a random sequence of bits and encrypting it with a symmetrical key received from said another communication device, yielding an encrypted sequence,

means for sending a first message to said another communication device, the message containing the encrypted sequence,

means for receiving a second message from said another communication device, the second message containing a decrypted random sequence, decrypted random sequence being the result of a bitwise feeding of the encrypted sequence and the symmetrical key to a signals combiner for decryption,

means for storing the decrypted random sequence in a shift register,

means for comparing the received decrypted random sequence with the created random sequence after a time interval comprising travel times related to the transmission of the first and second messages and processing times for decryption, storage and comparison of the random sequence,

means for generating, if the result of the comparison is valid, a certificate containing at least the signal travelling time and a timestamp, the signal travelling time being deducted from said time interval.

In another implementation a computer-readable medium having embodied thereon a computer program for executing a method to certify location of a communication device. Said computer program comprises instructions which carry out steps according to the method according to the invention.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates a schematic block diagram of a communication system according to one embodiment of the invention for a certification of location of a communication device.

Figure 2 illustrates a flow chart illustrating a method for a certification of location of a communication device according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

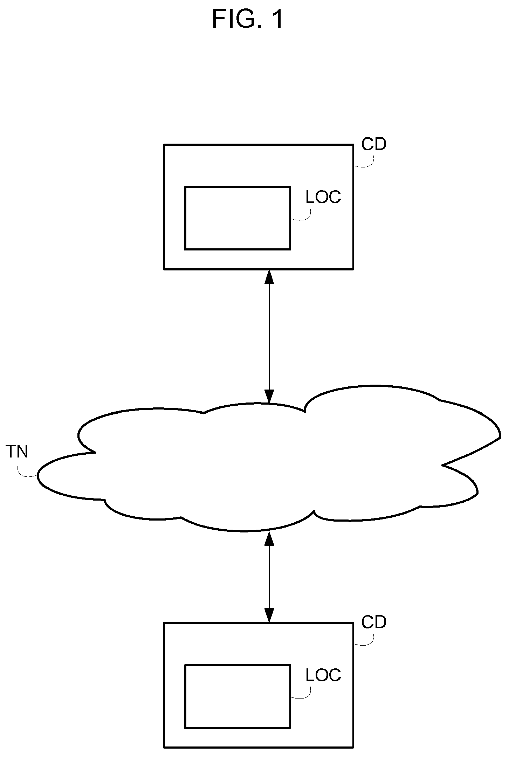

Referring to FIG. 1, a communication system comprises a set of communication devices CD which are able to communicate between them through at least one telecommunication network TN.

In one embodiment to which it will be referred thereafter, one communication device is a mobile device and the other communication device is a base station, communicating between them through a wireless network.

The telecommunication network TN may be a wired or wireless network, or a combination of wired and wireless networks.

In one example, the telecommunication network TN is a digital cellular radio communication network of the GSM (Global System for Mobile communications) or UMTS (Universal Mobile Telecommunications System) or CDMA (Code Division Multiple Access) type or even LTE (Long Term Evolution) type. The GSM type network may be coupled with a GPRS (General Packet Radio Service) network for the transmission of data by packets with mobility and access management via radio.

In another example, the telecommunication network TN is a wired network, associated with a packet network, for example, an IP ("Internet Protocol") high-speed network such as the Internet or an intranet, or even a company-specific private network. The wired network can be based on optical communications. In this example, said network is limited to direct peer to peer links with straight link topologies, like straight fiber links, free space optics, or straight wire links.

The communication device CD can be a mobile device. For instance, a communication device is a mobile telephone, a smartphone, or a tablet, an electronic telecommunication device or object that is personal to the user. Furthermore, the communication device can be a connected object that may be of different nature. For instance, the connected object may be device such as an advertisement board, a television set, a household appliance, a communication terminal, a fridge, a camera, a media drive, an information display etc. The connected object may be present in the user's home but also in public environments or other locations, for instance the user's workplace.

The communication device CD can be a fixed device. For instance, the communication device is a base station that includes baseband processing and radio module for a coverage area which access type is GSM (Global System for Mobile communications) coupled with a GPRS (General Packet Radio Service) network or UMTS (Universal Mobile Telecommunications System) or CDMA (Code Division Multiple Access) or even LTE (Long Term Evolution). The base station can also be a pico base station or a femto base station located in residential buildings.

The communication device CD comprises a set of antenna associated with a communication module allowing transmission and reception of signals. The set of antenna is also associated with a location module LOC dedicated to certify location of the communication device or of another communication device.

The location module LOC includes at least one shift register that is of SISO-type (Serial In Serial Out) according to which the information is shifted by 1 bit per clock cycle. The location module LOC includes also a signals combiner that is adapted to perform a "XOR" logical operation.

In one example illustrated in FIG. 1, a mobile device is located in the vicinity of a base station of a wireless network. It is assumed that the base station has already a trusted geo-location and the mobile device is seeking to get a certified geo-location in collaboration with the base station.

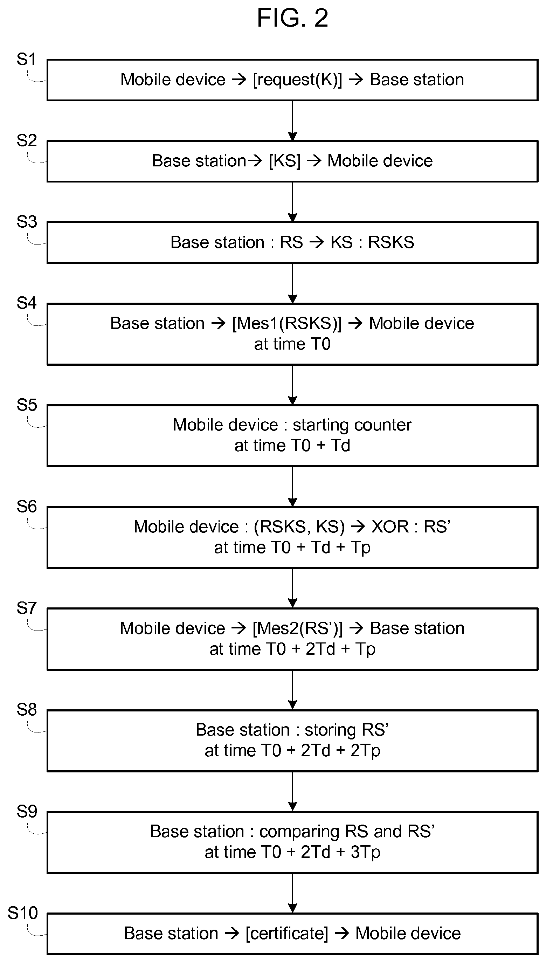

With reference to FIG. 2, a method for a certification of location of a communication device according to one embodiment of the invention comprises steps S1 to S10 executed within the communication system. In this embodiment, one communication device is a mobile device and the other communication device is a base station, communicating between them through a wireless network.

In step S1, the mobile device booked in the wireless network with the base station. The mobile device sends a message with a request for geo-location certification to the base station, the message containing a public key K for encryption.

In step S2, the base station generates a symmetrical key KS via a random generator, and uses the received public key K to send the symmetrical key KS to the mobile station in encrypted way. The mobile device stores the received symmetrical key KS in a fast shift register.

In step S3, the base station creates a random sequence RS of bits and encrypts it with the symmetrical key KS, yielding to an encrypted sequence RSKS.

In step S4, the base station sends a first message Mes1 to the mobile device, the first message being sent at time T0 over a first frequency Fgeo1 with an amplitude modulation of one bit for two periods and containing a frame synchronization pulse followed by the encrypted sequence RSKS. At time T0 a counter starts counting up the addresses of cells Tsrb of a shift register in the base station.

In step S5, once the frame synchronization pulse in the first message Mes1 is received, the mobile device starts a counter at time T0 + Td, wherein Td is the travel time of the signal carrying the first message Mes1. A frequency Fclock of clock is derived from the first frequency Fgeo1 : Fclock = 0,5*Fgeo1.

In step S6, the mobile device feeds bitwise the encrypted sequence RSKS and the symmetrical key KS to a signal combiner using a fast shift register for decryption, which output is a decrypted random sequence RS'. The signals combiner is adapted to perform a bitwise "XOR" logical operation for combining the encrypted sequence RSKS and the symmetrical key K for yielding to the decrypted random sequence. The decrypted random sequence RS' is obtained at time T0 + Td +Tp, wherein Tp is the processing time for decryption yielding to the decrypted random sequence RS'. The processing time can be derived from the length of the encrypted sequence RSKS as being Tp = [length of RSKS] / Fclock.

In step S7, the mobile device sends a second message Mes2 to the base station, the second message being received at time T0 + 2Td + Tp over a second frequency Fgeo2 and containing the decrypted random sequence RS', wherein another Td is the travel time of the signal carrying the second message Mes2.

In step S8, the base station receives decrypted random sequence RS' and stores the received decrypted random sequence RS' in a fast shift register at address Tsrb = T0 + 2Td + 2Tp, wherein another processing time Tp is needed for the storage of the decrypted random sequence RS'.

In step S9, the base station compares the received decrypted random sequence RS' with the created random sequence (during step S3) using a shift register. To that end, the two signals in the shift registers are subsequently shifted by one clock cycle Tclock one after the other and bitwise compared to each other. The comparison is considered to be over at time T0 + 2Td + 3Tp using a fast shift register at address Tsrb = T0 + 2Td + 3Tp, wherein another processing time Tp is needed for the comparison of the random sequences. When all bits are matching, the travel time Td can be derived:

$$Td = (Tsrb - 3 * Tp - T0) / 2.$$

In other words, it is assumed that the comparison is considered to be over after a time interval equal to "2Td + 3Tp" or "Tsrb - T0". The time interval covers the time between the beginning of the sending of the first message Mes1 and the end of the comparison of the received decrypted random sequence RS' with the created random sequence.

At step S10, the base station generates a certificate containing at least the travel time and a timestamp, if the result of the comparison is valid, i.e. if the decrypted random sequence RS' matches the created random sequence RS. The certificate can further contain a trusted geo-location that is derived from the signal traveling time and the known location of the base station. The base station sends this certificate to the mobile station, using the public key infrastructure. More precisely, the certificate is digitally signed with a secret key from the base station and encrypted with the public key K received from the mobile device. The certificate can be communicated through the network or checked by any authority. The certificate can contain any additional digital property or data, depending on the nature of the mobile device. In another embodiment, the certificate further contains the known location of the base station and the mobile device derives a trusted geo-location from the signal traveling time and the known location of the base station.

A limitation of resolution S of distance can be defined as follows:

$$S = 2 * C / Fgeo1, \text{ wherein C is the light speed (30 cm/ns).}$$

If the first frequency Fgeo1 is 10 GHz, the resolution S of distance can be under 6 cm. The practical meaning of this certificate with this resolution is that the base station, which is trusted being at its known geo-location, can certify that the mobile device has been in close proximity with certain resolution at a certain point in time.

For improved precision or for near distances (i.e. short Td), the sequence of the method can be ping-ponged several times between the mobile device and the base station in order to come to longer travelling times. Distance is then derived by dividing the overall (summed) travelling time by the number of message exchanges.

For security reasons the symmetrical key KS and the random sequence are generated by a random generator and only used once. A new request for geo-location certification requires a new set of symmetrical key and random sequence.

In one embodiment variant, the method can be based on a Time Division Duplex mode using only the first frequency Fgeo1 to send and receive messages.

A combination of a set of e.g. three base stations (or more) would even allow to create a trusted geo-location within 3-demsional space with high resolution.

As the method applies to any kind of situation wherein the communication device is either a base station or a mobile device for example, this certification algorithm could be implemented at the base station side or at the mobile device.

In one embodiment with a base station and a mobile device, a method to certify location of the mobile device being located in the vicinity of the base station, comprises:

the base station creates a random sequence of bits and encrypts it with a symmetrical key received from the mobile device, yielding to an encrypted sequence,

the base station sends a first message to the mobile device, the message containing the encrypted sequence,

the mobile device feeds bitwise the encrypted sequence and the symmetrical key to a signals combiner for decryption, yielding to decrypted random sequence,

the mobile device sends a second message to the base station, the second message containing the decrypted random sequence,

the base station stores the decrypted random sequence in a fast shift register,

the base station compares the received decrypted random sequence with the created random sequence after a time interval comprising travel times related to the first and second messages and processing times for decryption, storage and comparison of the random sequence,

if the result of the comparison is valid, the base station generates a certificate containing at least the signal travelling time, the trusted geo-location and a timestamp, the signal travelling time being deducted from the time interval.

An embodiment comprises a communication device comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method to certify location of a first communication device being located in the vicinity of a second communication device, the method comprising the following steps in the second communication device:

creating (S3) a random sequence (RS) of bits and encrypting it with a symmetrical key (KS) received from the first communication device, yielding an encrypted sequence (RSKS),

sending (S4) a first message (Mes1) to the first communication device, the message containing the encrypted sequence (RSKS),

receiving (S7) a second message (Mes2) from the first communication device, the second message containing a decrypted random sequence (RS'), the decrypted random sequence (RS') being the result of a bitwise feeding of the encrypted sequence (RSKS) and the symmetrical key (KS) to a signals combiner for decryption,

storing (S8) the decrypted random sequence (RS') in a shift register,

comparing (S9) the received decrypted random sequence (RS') with the created random sequence after a time interval comprising travel times (Td) related to the transmission of the first and second messages and processing times (Tp) for decryption, storage and comparison of the random sequence,

if the result of the comparison is valid, generating (S10) a certificate containing at least the signal travelling time and a timestamp, the signal travelling time being deducted from said time interval.

2. The method as claimed in claim 1, wherein the certificate further contains a trusted geo-location that is derived from the signal traveling time and the known location of the second communication device.

3. The method as claimed in claim 1 or 2, wherein the second communication device sends the generated certificate to the first communication device.

4. The method as claimed in any of the preceding claims, wherein during comparison, the decrypted random sequence (RS') and the created random sequence (RS) are subsequently shifted by one clock cycle one after the other in a shift register.

5. The method as claimed in any of the preceding claims, wherein the travel time (Td) is deducted from the half of the subtraction of three processing times (Tp) from the time interval.

6. The method as claimed in any of the preceding claims, wherein the time interval covers the time between the beginning of the sending of the first message (Mes1) and the end of the comparison of the received decrypted random sequence (RS') with the created random sequence (RS).

7. The method as claimed in any of the preceding claims, wherein at the beginning of the sending of the first message (Mes1), a counter in the second communication device starts counting up the addresses of cells of the shift register.

8. The method as claimed in any of the preceding claims, wherein the first message comprises a frame synchronization pulse that is followed by the encrypted sequence (RSKS).

9. The method as claimed in any of the preceding claims, wherein the signals combiner is adapted to perform a "XOR" logical operation for combining the encrypted sequence (RSKS) and the symmetrical key (KS) for yielding to the decrypted random sequence (RS').

10. The method as claimed in any of the preceding claims, wherein the first message is sent over a frequency (Fgeo1), and a resolution of distance is deducted from the division of the light speed by said frequency.

11. The method as claimed in any of the preceding claims, wherein the first and second communication devices are fixed or mobile communication devices.

12. A communication device to certify location of another communication device being located in the vicinity of said communication device, said communication device comprising:

means (LOC) for creating a random sequence (RS) of bits and encrypting it with a symmetrical key (KS) received from said another communication device, yielding to an encrypted sequence (RSKS),

means (LOC) for sending a first message (Mes1) to said another communication device, the message containing the encrypted sequence (RSKS),

means (LOC) for receiving a second message (Mes2) from said another communication device, the second message containing a decrypted random sequence (RS'), decrypted random sequence (RS') being the result of a bitwise feeding of the encrypted sequence (RSKS) and the symmetrical key (KS) to a signals combiner for decryption,

means (LOC) for storing the decrypted random sequence (RS') in a shift register,

means (LOC) for comparing the received decrypted random sequence (RS') with the created random sequence after a time interval comprising travel times (Td) related to the transmission of the first and second messages and processing times (Tp) for decryption, storage and comparison of the random sequence,

means (LOC) for generating, if the result of the comparison is valid, a certificate containing at least the signal travelling time and a timestamp, the signal travelling time being deducted from the time interval.

**13.** A computer-readable medium having embodied thereon a computer program for executing a method to certify location of a first communication device being located in the vicinity of a second communication device, the method comprising:

creating (S3) a random sequence (RS) of bits and encrypts it with a symmetrical key (KS) received from the first communication device, yielding to an encrypted sequence (RSKS),

sending (S4) a first message (Mes1) to the first communication device, the message containing the encrypted sequence (RSKS),

receiving (S7) a second message (Mes2) from the first communication device, the second message containing a decrypted random sequence (RS'), the decrypted random sequence (RS') being the result of a bitwise feeding of the encrypted sequence (RSKS) and the symmetrical key (KS) to a signals combiner for decryption,

storing (S8) the decrypted random sequence (RS') in a shift register,

comparing (S9) the received decrypted random sequence (RS') with the created random sequence after a time interval comprising travel times (Td) related to the transmission of the first and second messages and processing times (Tp) for decryption, storage and comparison of the random sequence,

if the result of the comparison is valid, generating (S10) a certificate containing at least the signal travelling time and a timestamp, the signal travelling time being deducted from the time interval.

# FIG. 1

# FIG. 2

S1
| Mobile device → [request(K)] → Base station |

S2
| Base station→ [KS] → Mobile device |

S3
| Base station : RS → KS : RSKS |

S4
| Base station → [Mes1(RSKS)] → Mobile device<br>at time T0 |

S5
| Mobile device : starting counter<br>at time T0 + Td |

S6
| Mobile device : (RSKS, KS) → XOR : RS'<br>at time T0 + Td + Tp |

S7
| Mobile device → [Mes2(RS')] → Base station<br>at time T0 + 2Td + Tp |

S8
| Base station : storing RS'<br>at time T0 + 2Td + 2Tp |

S9
| Base station : comparing RS and RS'<br>at time T0 + 2Td + 3Tp |

S10
| Base station → [certificate] → Mobile device |

Europäisches
Patentamt

European
Patent Office

Office européen
des brevets

# EUROPEAN SEARCH REPORT

Application Number

EP 15 30 7071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 659 617 A (FISCHER ADDISON M [US]) 19 August 1997 (1997-08-19) * the whole document * ----- | 1-13 | INV. H04L9/32 |

TECHNICAL FIELDS
SEARCHED     (IPC)

H04L
H04W

The present search report has been drawn up for all claims

| Place of search | Date of completion of the search | Examiner |
|---|---|---|
| Berlin | 5 April 2016 | Carnerero Álvaro, F |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 15 30 7071

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2016

| Patent document cited in search report | | Publication date | Patent family member(s) | | Publication date |
|---|---|---|---|---|---|
| US 5659617 | A | 19-08-1997 | US | RE38899 E1 | 29-11-2005 |
| | | | US | 5659617 A | 19-08-1997 |

For more details about this annex : see Official Journal of the European Patent Office, No. 12/82

EPO FORM P0459